# EUROPEAN PATENT APPLICATION

(11) **EP 3 958 173 A1**
(43) Date of publication of application: **23.02.2022**
(21) Application number: 21789598.6
(22) Date of filing: 25.01.2021
(51) Int. Cl.: G06K 9/00

(54) **METHOD AND APPARATUS FOR TRAINING FACIAL RECOGNITION MODEL, ELECTRONIC DEVICE, AND STORAGE MEDIUM**

(30) Priority: 24.06.2020 CN 202010591858
(71) Applicant: BEIJING BAIDU NETCOM SCIENCE TECHNOLOGY CO., LTD., No.10 Shangdi 10th Street Haidian District Beijing 100085 (CN)
(72) Inventor: TIAN, Fei, Beijing 100085 (CN); WEN, Shengzhao, Beijing 100085 (CN); YANG, Fukui, Beijing 100085 (CN)
(74) Representative: Carangelo, Pierluigi
(86) International application number: PCT/CN2021/073484
(87) International publication number: WO 2021/258727

(57) **Abstract**

Provided are a training method and apparatus of a face recognition model, an electronic device and a storage medium, relating to the fields of deep learning, cloud computing and computer vision in artificial intelligence and, in particular, to recognition of a face wearing a mask. The solution includes: using a first block of a face recognition model as a current block and inputting a face image of a current user into the current block; inputting an image feature output by the current block into a current attention module and performing self-weighting processing on the image feature output by the current block; inputting the image feature obtained after the processing into a subsequent block; repeatedly performing the preceding operations until the image feature output by the current block is input into a last block; and training the face recognition model by using an image feature output by the last block. The solution can effectively improve the accuracy with which the face recognition model recognizes a face wearing a mask.

## Description

This application claims priority to Chinese Patent Application No. 202010591858.5 filed with the China National Intellectual Property Administration (CNIPA) on Jun. 24, 2020, the disclosure of which is incorporated herein by reference in its entirety.

### TECHNICAL FIELD

Embodiments of the present application relate to the field of computer application technology and, in particular, to the fields of deep learning, cloud computing and computer vision in artificial intelligence, for example, recognition of a face wearing a mask. More particularly, embodiments of the present application relate to a training method and apparatus of a face recognition model, an electronic device and a storage medium.

### BACKGROUND

With the development of computer technology, image processing techniques have been applied to more and more fields. Generally, a face recognition model may be trained using a machine learning method, and a face in an image may be recognized using the face recognition model. The difficulty in recognizing a face wearing a mask is that the face recognition model needs to recognize both the face wearing a mask and the face not wearing a mask. Compared with the case of not wearing a mask, there is no mouth information, nose information and other related information in the case of wearing a mask. If no modification is made in model training, the face recognition model has a worse face recognition effect when recognizing a face wearing a mask.

In an existing training method of a face recognition model, no discrimination is made between mask data and non-mask data, and the ID classification method is used for training. In the existing training method, the face recognition model is not specially processed for the case of a face wearing a mask, causing the accuracy of recognizing a face wearing a mask by the face recognition model to be not high.

### SUMMARY

The following is a summary of the subject matter described herein in detail. This summary is not intended to limit the scope of the claims.

Embodiments of the present application provide a training method and apparatus of a face recognition model, an electronic device and a storage medium, effectively improving the accuracy with which the face recognition model recognizes a face wearing a mask.

According to one aspect of the present application, a training method of a face recognition model is provided. The method includes: in response to determining that a to-be-trained face recognition model does not satisfy a convergence condition, using a first block of the to-be-trained face recognition model as a current block and inputting a face image of a current user into the current block, where the face image includes an image of a face wearing a mask and an image of a face not wearing a mask; inputting an image feature output by the current block into a current attention module and performing, through the current attention module, self-weighting processing on the image feature output by the current block to obtain an image feature after the self-weighting processing; inputting the image feature obtained after the self-weighting processing into a subsequent block of the current block, using the subsequent block as the current block, and repeatedly performing the preceding operations until an image feature output by the current block is input into a last block of the to-be-trained face recognition model; and training the to-be-trained face recognition model by using an image feature output by the last block, using a face image of a next user as the face image of the current user, and repeatedly performing the preceding operations until the to-be-trained face recognition model satisfies the convergence condition.

According to one aspect of the present application, a training apparatus of a face recognition model is provided. The apparatus includes an input module, a self-weighting processing module and a training module.

The input module is configured to, in response to determining that a to-be-trained face recognition model does not satisfy a convergence condition, use a first block of the to-be-trained face recognition model as a current block and input a face image of a current user into the current block, where the face image includes an image of a face wearing a mask and an image of a face not wearing a mask.

The self-weighting processing module is configured to input an image feature output by the current block into a current attention module and perform, through the current attention module, self-weighting processing on the image feature output by the current block to obtain an image feature after the self-weighting processing.

The input module is further configured to input the image feature obtained after the self-weighting processing into a subsequent block of the current block, use the subsequent block as the current block, and repeatedly perform the preceding operations until an image feature output by the current block is input into a last block of the to-be-trained face recognition model.

The training module is configured to train the to-be-trained face recognition model by using an image feature output by the last block, use a face image of a next user as the face image of the current user, and repeatedly perform the preceding operations until the to-be-trained face recognition model satisfies the convergence condition.

According to one aspect of the present application, an electronic device is provided. The electronic device includes one or more processors and a memory for storing one or more programs.

The one or more programs, when executed by the one or more processors, cause the one or more processors to implement the training method of a face recognition model according to any embodiment of the present application.

According to one aspect of the present application, a storage medium is provided. The storage medium stores computer programs. The programs, when executed by a processor, implement the training method of a face recognition model according to any embodiment of the present application.

The present application solves the problem of a not high accuracy with which a face recognition model recognizes a face wearing a mask in the existing art for the case of a face wearing a mask. The solution of embodiments of the present application can effectively improve the accuracy with which the face recognition model recognizes a face wearing a mask.

It is to be understood that the content described in this part is neither intended to identify key or important features of embodiments of the present disclosure nor intended to limit the scope of the present disclosure. Other features of the present disclosure are apparent from the description provided hereinafter. Other aspects can be understood after the drawings and the detailed description are read and understood.

### BRIEF DESCRIPTION OF DRAWINGS

The drawings are intended to provide a better understanding of the present solution and not to limit the present application.
FIG. 1 is a flowchart of a training method of a face recognition model according to an embodiment of the present application.
FIG. 2 is a diagram illustrating a structure of a face recognition model according to an embodiment of the present application.
FIG. 3 is a diagram illustrating a structure of an attention module according to an embodiment of the present application.
FIG. 4 is a flowchart of a training method of a face recognition model according to an embodiment of the present application.
FIG. 5 is a diagram illustrating a structure of a spatial attention module according to an embodiment of the present application.
FIG. 6 is a diagram illustrating a structure of a channel attention module according to an embodiment of the present application.
FIG. 7 is a diagram illustrating a structure of a training apparatus of a face recognition model according to an embodiment of the present application.
FIG. 8 is a diagram illustrating a structure of a self-weighting processing module according to an embodiment of the present application.
FIG. 9 is a block diagram of an electronic device for implementing a training method of a face recognition model according to an embodiment of the present application.

### DETAILED DESCRIPTION

Example embodiments of the present application, including details of embodiments of the present application, are described hereinafter in conjunction with the drawings to facilitate understanding. The example embodiments are illustrative only. Therefore, it is to be understood by those of ordinary skill in the art that various changes and modifications may be made to the embodiments described herein without departing from the scope and spirit of the present application. Similarly, description of well-known functions and structures is omitted hereinafter for clarity and conciseness.

### Embodiment one

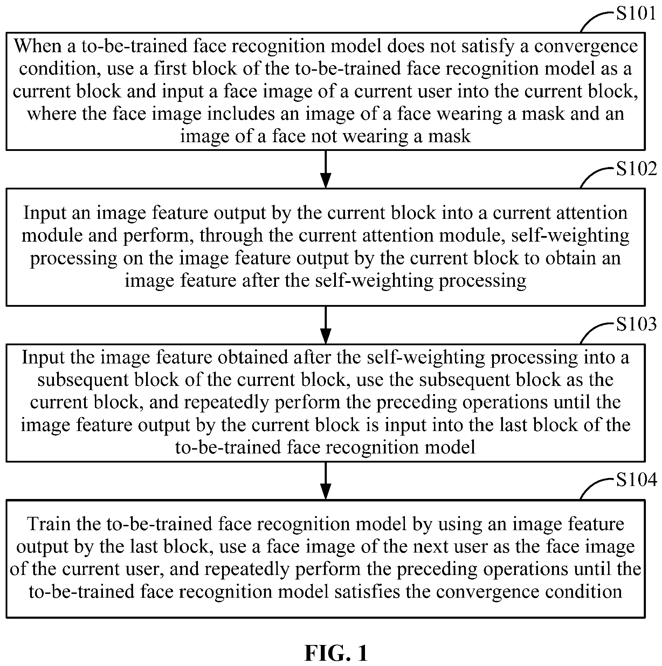

FIG. 1 is a flowchart of a training method of a face recognition model according to an embodiment of the present application. The method may be performed by a training apparatus of a face recognition model or by an electronic device. The apparatus or the electronic device may be implemented as software and/or hardware. The apparatus or the electronic device may be integrated in any intelligent device having the network communication function. As shown in FIG. 1, the training method of a face recognition model according to this embodiment may include the steps below.

In step S101, when a to-be-trained face recognition model does not satisfy a convergence condition, a first block of the to-be-trained face recognition model is used as a current block and a face image of a current user is input into the current block, where the face image includes an image of a face wearing a mask and an image of a face not wearing a mask.

In a specific embodiment of the present application, when a to-be-trained face recognition model does not satisfy a convergence condition, the electronic device may use a first block of the to-be-trained face recognition model as a current block and input a face image of a current user into the current block, where the face image includes an image of a face wearing a mask and an image of a face not wearing a mask. The face recognition model may include N blocks and N - 1 attention modules. One attention module is configured between each two adjacent blocks. N is a natural number greater than 1.

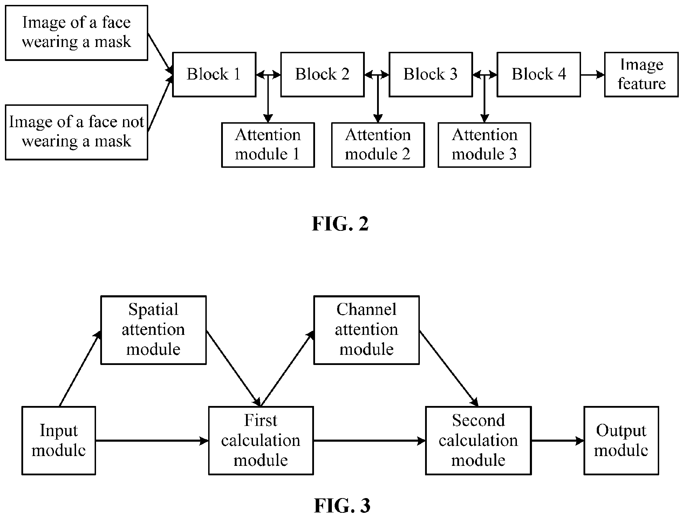

FIG. 2 is a diagram illustrating a structure of a face recognition model according to an embodiment of the present application. As shown in FIG. 2, the face recognition model includes four blocks and three attention modules. The four blocks are block 1, block 2, block 3 and block 4. The three attention modules are attention module 1, attention module 2 and attention module 3. Attention module 1 is configured between block 1 and block 2. Attention module 2 is configured between block 2 and block 3. Attention module 3 is configured between block 3 and block 4. A face image (including an image of a face wearing a mask and an image of a face not wearing a mask) may be input into block 1 so that an image feature output by block 1 is obtained. The image feature output by block 1 is input into attention module 1, and self-weighting processing is performed, through attention module 1, on the image feature output by block 1 so that an image feature is obtained after the self-weighting processing through attention module 1. The image feature obtained after the self-weighting processing through attention module 1 is input into block 2 so that an image feature output by block 2 is obtained. The image feature output by block 2 is input into attention module 2, and self-weighting processing is performed, through attention module 2, on the image feature output by block 2 so that an image feature is obtained after the self-weighting processing through attention module 2. The image feature obtained after the self-weighting processing through attention module 2 is input into block 3 so that an image feature output by block 3 is obtained. The image feature output by block 3 is input into attention module 3, and self-weighting processing is performed, through attention module 3, on the image feature output by block 3 so that an image feature is obtained after the self-weighting processing through attention module 3. The image feature obtained after the self-weighting processing through attention module 3 is input into block 4 so that an image feature output by block 4 is obtained.

In step S102, an image feature output by the current block is input into a current attention module, and self-weighting processing is performed, through the current attention module, on the image feature output by the current block so that an image feature is obtained after the self-weighting processing.

In a specific embodiment of the present application, the electronic device may input an image feature output by the current block to an attention module and perform self-weighting processing, through the attention module, on the image feature output by the current block to obtain an image feature after the self-weighting processing. The current attention module is configured between the current block and a subsequent block of the current block. The electronic device may input the image feature output by the current block into a spatial attention module in the current attention module to obtain a spatial mask output by the spatial attention module; perform first element-wise multiplication on the image feature output by the current block and the spatial mask output by the spatial attention module to obtain an image feature after the first element-wise multiplication; input the image feature obtained after the first element-wise multiplication into a channel attention module in the current attention module to obtain a channel mask output by the channel attention module; perform second element-wise multiplication on the image feature obtained after the first element-wise multiplication and the channel mask output by the channel attention module to obtain an image feature after the second element-wise multiplication; and use the image feature obtained after the second element-wise multiplication as the image feature obtained after the self-weighting processing.

FIG. 3 is a diagram illustrating a structure of an attention module according to an embodiment of the present application. As shown in FIG. 3, the attention module may include an input module, a spatial attention module, a first calculation module, a channel attention module, a second calculation module and an output module. When the current attention module performs the self-weighting processing on the image feature output by the current block, the following operations may be performed: the image feature output by the current block is input, through the input module, into the spatial attention module and the first calculation module separately; the first calculation module performs the first element-wise multiplication on the image feature output by the current block and the spatial mask output by the spatial attention module to obtain an image feature after the first element-wise multiplication; the image feature obtained after the first element-wise multiplication is input into the channel attention module and the second calculation module separately; the second calculation module performs second element-wise multiplication on the image feature obtained after the first element-wise multiplication and the channel mask output by the channel attention module to obtain an image feature after the second element-wise multiplication; and then the image feature obtained after the second element-wise multiplication is used as the image feature obtained after the self-weighting processing.

In step S103, the image feature obtained after the self-weighting processing is input into the subsequent block of the current block, the subsequent block is used as the current block, and the preceding operations are repeatedly performed until the image feature output by the current block is input into the last block of the to-be-trained face recognition model.

In a specific embodiment of the present application, the electronic device may input the image feature obtained after the self-weighting processing into the subsequent block of the current block, use the subsequent block as the current block, and repeatedly perform the preceding operations until the image feature output by the current block is input into the last block of the to-be-trained face recognition model. For example, after obtaining the image feature after the self-weighting processing through attention module 1, the electronic device inputs the image feature obtained after the self-weighting processing through attention module 1 into block 2, uses block 2 as the current block, and repeatedly performs the preceding operations until the image feature output by the current block is input into the last block of the to-be-trained face recognition model.

In step S104, the to-be-trained face recognition model is trained by using an image feature output by the last block, a face image of the next user is used as the face image of the current user, and the preceding operations are repeatedly performed until the to-be-trained face recognition model satisfies the convergence condition.

In a specific embodiment of the present application, the electronic device may train the to-be-trained face recognition model by using an image feature output by the last block, use the face image of the next user as the face image of the current user, and repeatedly perform the preceding operations until the to-be-trained face recognition model satisfies the convergence condition. The image of a face wearing a mask and the image of a face not wearing a mask are the face image of the same person. However, there is difference between an image feature obtained after the image of a face wearing a mask is input into the to-be-trained face recognition model and an image feature obtained after the image of a face not wearing a mask is input into the to-be-trained face recognition model. Therefore, it is needed to calculate the difference between the two image features by using the loss function: Additive Angular Margin Loss and adjust parameters of the to-be-trained face recognition model according to the difference between the two image features.

Preferably, in a specific embodiment of the present application, the electronic device may first train a non-mask face recognition model and then add attention modules to the non-mask face recognition model. In this case, it is needed to fix the non-mask face recognition model and learn only the attention modules. Different attention modules have the same structure. The attention module may be embedded between blocks of a mainstream neural network (for example, a backbone network or a ResNet). The image feature output by each block is multiplied by the spatial mask output by the spatial attention module and the channel mask output by the channel attention module in sequence. In this manner, the output image feature can be emphasized and suppressed, and thereby the accuracy with which the face recognition model recognizes a face wearing a mask can be effectively improved.

In the training method of a face recognition model according to this embodiment of the present application, when a to-be-trained face recognition model does not satisfy a convergence condition, a first block of the to-be-trained face recognition model is used as a current block and a face image of a current user is input into the current block; then an image feature output by the current block is input into a current attention module, and self-weighting processing is performed, through the current attention module, on the image feature output by the current block so that an image feature is obtained after the self-weighting processing; then the image feature obtained after the self-weighting processing is input into a subsequent block of the current block; the subsequent block is used as the current block; and the preceding operations are repeatedly performed until the image feature output by the current block is input into the last block of the to-be-trained face recognition model; and then the to-be-trained face recognition model is trained by using an image feature output by the last block; a face image of the next user is used as the face image of the current user; and the preceding operations are repeatedly performed until the to-be-trained face recognition model satisfies the convergence condition. That is, in the present application, a current attention module is configured between the current block and the subsequent block of the current block. The image feature output by the current block can be emphasized and suppressed through the current attention module. In this manner, the accuracy with which the face recognition model recognizes a face wearing a mask can be effectively improved. In contrast, in an existing training method of a face recognition model, the face recognition model is not specially processed for the case of a face wearing a mask, causing the accuracy of recognizing a face wearing a mask by the face recognition model to be not high. In the present application, the solution of configuring one attention module between each two adjacent blocks overcomes the problem of a not high accuracy with which a face recognition model recognizes a face wearing a mask in the existing art. The solution of this embodiment of the present application can effectively improve the accuracy with which the face recognition model recognizes a face wearing a mask. Moreover, the solution of this embodiment of the present application can be easily implemented and popularized and can be applied more widely.

### Embodiment two

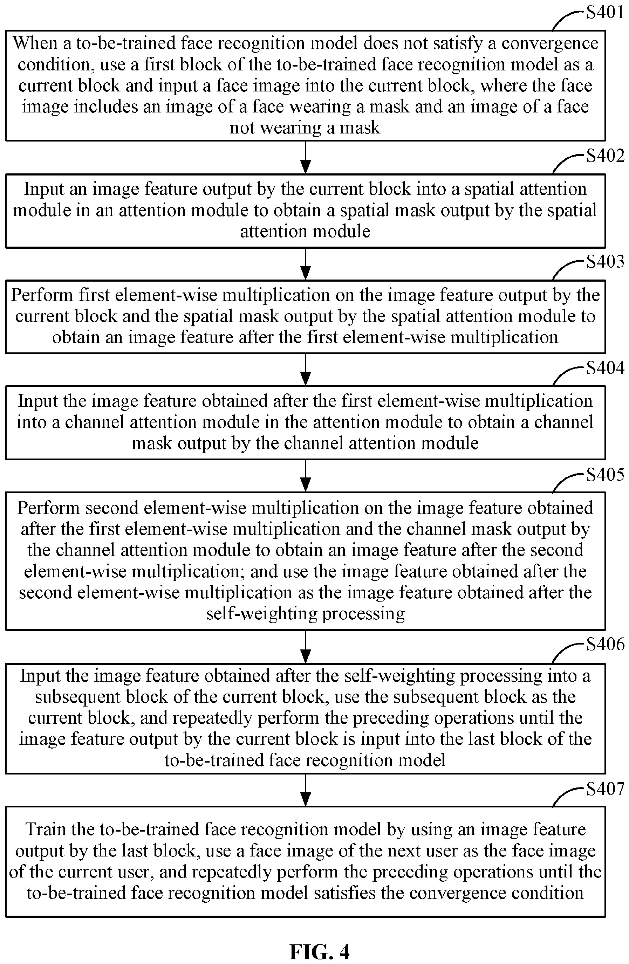

FIG. 4 is a flowchart of a training method of a face recognition model according to an embodiment of the present application. This embodiment is an optional solution provided based on the preceding embodiment. As shown in FIG. 4, the training method of a face recognition model may include the steps below.

In step S401, when a to-be-trained face recognition model does not satisfy a convergence condition, a first block of the to-be-trained face recognition model is used as a current block and a face image is input into the current block, where the face image includes an image of a face wearing a mask and an image of a face not wearing a mask.

In step S402, an image feature output by the current block is input into a spatial attention module in an attention module so that a spatial mask output by the spatial attention module is obtained.

In a specific embodiment of the present application, an electronic device may input an image feature output by a current block into a spatial attention module in an attention module to obtain a spatial mask output by the spatial attention module. The electronic device may input a face feature output by the current block into a channel maximum global pool in the spatial attention module and a channel average global pool in the spatial attention module separately to obtain an image feature output by the channel maximum global pool and an image feature output by the channel average global pool; perform a convolution calculation on the image feature output by the channel maximum global pool and the image feature output by the channel average global pool to obtain an image feature after the convolution calculation; and calculate, according to the image feature obtained after the convolution calculation, a spatial mask output by a spatial attention module. The spatial mask output by the spatial attention module may be a matrix composed of spatial weight values corresponding to all features of an image feature. The image feature output by the current block may include features 1 to M. M is a natural number greater than or equal to 1. Accordingly, the spatial mask output by the spatial attention module may include spatial weight values 1 to M.

Preferably, in a specific embodiment of the present application, dimensions of the image feature obtained after the convolution calculation are (1, 1, H, W). H denotes the height of the face image. W denotes the width of the face image. With the preceding settings of dimensions, the accuracy with which the face recognition model recognizes a face wearing a mask can be effectively improved.

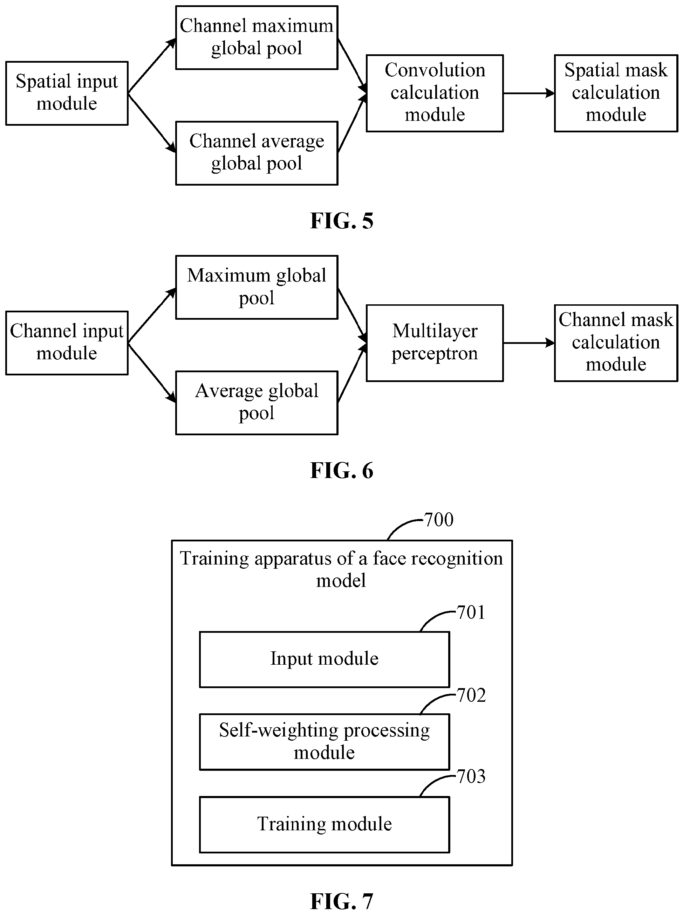

FIG. 5 is a diagram illustrating a structure of a spatial attention module according to an embodiment of the present application. As shown in FIG. 5, the spatial attention module may include a spatial input module, a channel maximum global pool (Channel Max Global Pool), a channel average global pool (Channel Avg Global Pool), a convolution calculation module (Conv) and a spatial mask calculation module (Spatial Mask). The electronic device may input, through the spatial input module, a face feature output by the current block into a channel maximum global pool and a channel average global pool separately to obtain an image feature output by the channel maximum global pool and an image feature output by the channel average global pool; input, through the channel maximum global pool and the channel average global pool, the image feature output by the channel maximum global pool and the image feature output by the channel average global pool into the convolution calculation module to obtain an image feature output by the convolution calculation module; input the image feature output by the convolution calculation module into the spatial mask calculation module to obtain a spatial mask output by the spatial mask calculation module; and then use the spatial mask output by the spatial mask calculation module as a spatial mask output by the spatial attention module.

In step S403, first element-wise multiplication is performed on the image feature output by the current block and the spatial mask output by the spatial attention module so that an image feature is obtained after the first element-wise multiplication.

In a specific embodiment of the present application, the electronic device may perform first element-wise multiplication on the image feature output by the current block and the spatial mask output by the spatial attention module to obtain an image feature after the first element-wise multiplication. The image feature output by the current block may include features 1 to M. M is a natural number greater than or equal to 1. Accordingly, the spatial mask output by the spatial attention module may include spatial weight values 1 to M. In this step, feature 1 is multiplied by spatial weight value 1 so that the corrected image feature of feature 1 is obtained; feature 2 is multiplied by spatial weight value 2 so that the corrected image feature of feature 2 is obtained; ...; and feature M is multiplied by spatial weight value M so that the corrected image feature of feature M is obtained. For example, it is assumed that the image feature output by the current block may include features 1 to 9. Accordingly, the spatial mask output by the spatial attention module may include spatial weight values 1 to 9. In this step, feature 1 is multiplied by spatial weight value 1 so that the corrected image feature of feature 1 is obtained; feature 2 is multiplied by spatial weight value 2 so that the corrected image feature of feature 2 is obtained; ...; and feature 9 is multiplied by spatial weight value 9 so that the corrected image feature of feature 9 is obtained.

In step S404, the image feature obtained after the first element-wise multiplication is input into a channel attention module in the attention module so that a channel mask output by the channel attention module is obtained.

In a specific embodiment of the present application, the electronic device may input the image feature obtained after the first element-wise multiplication into a channel attention module in the attention module to obtain a channel mask output by the channel attention module. The electronic device may input the image feature obtained after the first element-wise multiplication into a maximum global pool in the channel attention module and an average global pool in the channel attention module separately to obtain an image feature output by the maximum global pool and an image feature output by the average global pool; input the image feature output by the maximum global pool and the image feature output by the average global pool into a multilayer perceptron to obtain an image feature output by the multilayer perceptron; and then calculate, according to the image feature output by the multilayer perceptron, the channel mask output by the channel attention module. The channel mask output by the channel attention module may be a matrix composed of weight values corresponding to all channels where an image feature is located. The channels where the image feature output by the current block is located may include channels 1 to P. P is a natural number greater than or equal to 1. Accordingly, the channel mask output by the channel attention module may include channel weight values 1 to P.

FIG. 6 is a diagram illustrating a structure of a channel attention module according to an embodiment of the present application. As shown in FIG. 6, the channel attention module may include a channel input module, a maximum global pool (Max Global Pool), an average global pool (Avg Global Pool), a multilayer perceptron (MLP) and a channel mask calculation module (Channel Mask). The electronic device may input, through the channel input module, the image feature obtained after the first element-wise multiplication into a maximum global pool and an average global pool separately to obtain an image feature output by the maximum global pool and an image feature output by the average global pool; input the image feature output by the maximum global pool and the image feature output by the average global pool into a multilayer perceptron to obtain an image feature output by the multilayer perceptron; input the image feature output by the multilayer perceptron into the channel mask calculation module to obtain a channel mask output by the channel mask calculation module; and then use the channel mask output by the channel mask calculation module as a channel mask output by the channel attention module.

Preferably, in a specific embodiment of the present application, the multilayer perceptron is a two-layer fully connected network including a first-layer fully connected network and a second-layer fully connected network. Dimensions of an image feature output by the first-layer fully connected network are (1, C/4, 1, 1). Dimensions of an image feature output by the second-layer fully connected network are (1, C, 1, 1). C denotes the number of channels of the face image.

In step S405, second element-wise multiplication is performed on the image feature obtained after the first element-wise multiplication and the channel mask output by the channel attention module so that an image feature is obtained after the second element-wise multiplication; and the image feature obtained after the second element-wise multiplication is used as the image feature obtained after the self-weighting processing. With the preceding settings of dimensions, the accuracy with which the face recognition model recognizes a face wearing a mask can be effectively improved.

In a specific embodiment of the present application, the electronic device may perform second element-wise multiplication on the image feature obtained after the first element-wise multiplication and the channel mask output by the channel attention module to obtain an image feature after the second element-wise multiplication; and use the image feature obtained after the second element-wise multiplication as the image feature obtained after the self-weighting processing. The channels where the image feature obtained after the first element-wise multiplication is located may include channels 1 to P. P is a natural number greater than or equal to 1. Accordingly, the channel mask output by the channel attention module may include channel weight values 1 to M. In this step, the feature in channel 1 is multiplied by channel weight value 1 so that the corrected image feature of the feature in channel 1 is obtained; the feature in channel 2 is multiplied by channel weight value 2 so that the corrected image feature of the feature in channel 2 is obtained; ...; and the feature in channel P is multiplied by channel weight value M so that the corrected image feature of the feature in channel P is obtained. For example, it is assumed that the channels where the image feature output by the current block is located may include channels 1 to 3. Accordingly, the spatial mask output by the channel attention module may include channel weight values 1 to 3. In this step, the feature in channel 1 is multiplied by channel weight value 1 so that the corrected image feature in channel 1 is obtained; the feature in channel 2 is multiplied by channel weight value 2 so that the corrected image feature of the feature in channel 2 is obtained; and the feature in channel 3 is multiplied by channel weight value 3 so that the corrected image feature of the feature in channel 3 is obtained.

In step S406, the image feature obtained after the self-weighting processing is input into a subsequent block of the current block, the subsequent block is used as the current block, and the preceding operations are repeatedly performed until the image feature output by the current block is input into the last block of the to-be-trained face recognition model.

In step S407, the to-be-trained face recognition model is trained by using an image feature output by the last block, a face image of the next user is used as the face image of the current user, and the preceding operations are repeatedly performed until the to-be-trained face recognition model satisfies the convergence condition.

In the training method of a face recognition model according to this embodiment of the present application, when a to-be-trained face recognition model does not satisfy a convergence condition, a first block of the to-be-trained face recognition model is used as a current block and a face image of a current user is input into the current block; then an image feature output by the current block is input into a current attention module, and self-weighting processing is performed, through the current attention module, on the image feature output by the current block so that an image feature is obtained after the self-weighting processing; then the image feature obtained after the self-weighting processing is input into a subsequent block of the current block; the subsequent block is used as the current block; and the preceding operations are repeatedly performed until the image feature output by the current block is input into the last block of the to-be-trained face recognition model; and then the to-be-trained face recognition model is trained by using an image feature output by the last block; a face image of the next user is used as the face image of the current user; and the preceding operations are repeatedly performed until the to-be-trained face recognition model satisfies the convergence condition. That is, in the present application, a current attention module is configured between the current block and the subsequent block of the current block. The image feature output by the current block can be emphasized and suppressed through the current attention module. In this manner, the accuracy with which the face recognition model recognizes a face wearing a mask can be effectively improved. In contrast, in an existing training method of a face recognition model, the face recognition model is not specially processed for the case of a face wearing a mask, causing the accuracy of recognizing a face wearing a mask by the face recognition model to be not high. In the present application, the solution of configuring one attention module between each two adjacent blocks overcomes the problem of a not high accuracy with which a face recognition model recognizes a face wearing a mask in the existing art. The solution of this embodiment of the present application can effectively improve the accuracy with which the face recognition model recognizes a face wearing a mask. Moreover, the solution of this embodiment of the present application can be easily implemented and popularized and can be applied more widely.

### Embodiment three

FIG. 7 is a diagram illustrating a structure of a training apparatus of a face recognition model according to an embodiment of the present application. As shown in FIG. 7, an apparatus 700 includes an input module 701, a self-weighting processing module 702 and a training module 703.

The input module 701 is configured to, when a to-be-trained face recognition model does not satisfy a convergence condition, use a first block of the to-be-trained face recognition model as a current block and input a face image of a current user into the current block, where the face image includes an image of a face wearing a mask and an image of a face not wearing a mask.

The self-weighting processing module 702 is configured to input an image feature output by the current block into a current attention module and perform, through the current attention module, self-weighting processing on the image feature output by the current block to obtain an image feature after the self-weighting processing.

The input module 701 is further configured to input the image feature obtained after the self-weighting processing into a subsequent block of the current block, use the subsequent block as the current block, and repeatedly perform the preceding operations until the image feature output by the current block is input into the last block of the to-be-trained face recognition model.

The training module 703 is configured to train the to-be-trained face recognition model by using an image feature output by the last block, use a face image of the next user as the face image of the current user, and repeatedly perform the preceding operations until the to-be-trained face recognition model satisfies the convergence condition.

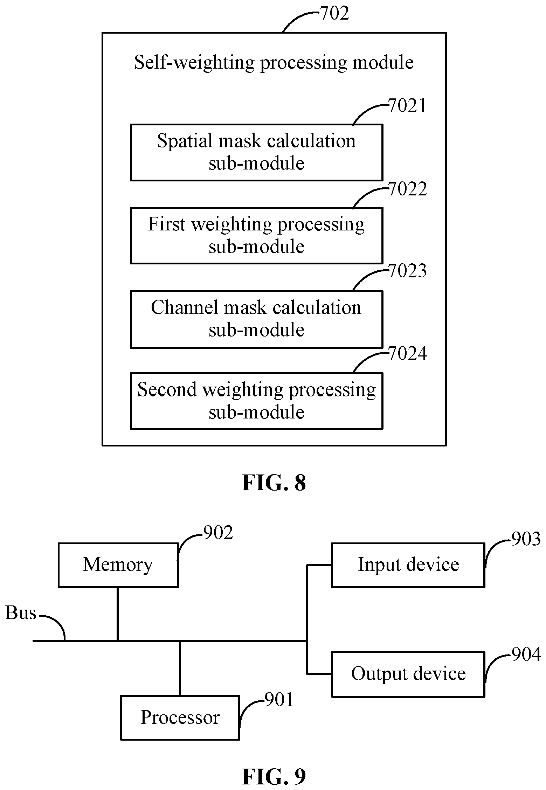

FIG. 8 is a diagram illustrating a structure of a self-weighting processing module according to an embodiment of the present application. As shown in FIG. 8, the self-weighting processing module 702 includes a spatial mask calculation sub-module 7021, a first weighting processing sub-module 7022, a channel mask calculation sub-module 7023 and a second weighting processing sub-module 7024.

The spatial mask calculation sub-module 7021 is configured to input the image feature output by the current block into a spatial attention module in the current attention module to obtain a spatial mask output by the spatial attention module.

The first weighting processing sub-module 7022 is configured to perform first element-wise multiplication on the image feature output by the current block and the spatial mask output by the spatial attention module to obtain an image feature after the first element-wise multiplication.

The channel mask calculation sub-module 7023 is configured to input the image feature obtained after the first element-wise multiplication into a channel attention module in the current attention module to obtain a channel mask output by the channel attention module.

The second weighting processing sub-module 7024 is configured to perform second element-wise multiplication on the image feature obtained after the first element-wise multiplication and the channel mask output by the channel attention module to obtain an image feature after the second element-wise multiplication; and use the image feature obtained after the second element-wise multiplication as the image feature obtained after the self-weighting processing.

Further, the spatial mask calculation sub-module 7021 is configured to input a face feature output by the current block into a channel maximum global pool in the spatial attention module and a channel average global pool in the spatial attention module separately to obtain an image feature output by the channel maximum global pool and an image feature output by the channel average global pool; perform a convolution calculation on the image feature output by the channel maximum global pool and the image feature output by the channel average global pool to obtain an image feature after the convolution calculation; and calculate, according to the image feature obtained after the convolution calculation, the spatial mask output by the spatial attention module.

Further, the channel mask calculation sub-module 7022 is configured to input the image feature obtained after the first element-wise multiplication into a maximum global pool in the channel attention module and an average global pool in the channel attention module separately to obtain an image feature output by the maximum global pool and an image feature output by the average global pool; input the image feature output by the maximum global pool and the image feature output by the average global pool into a multilayer perceptron to obtain an image feature output by the multilayer perceptron; and calculate, according to the image feature output by the multilayer perceptron, the channel mask output by the channel attention module.

Further, dimensions of the image feature obtained after the convolution calculation are (1, 1, H, W). H denotes a height of the face image. W denotes a width of the face image.

Further, the multilayer perceptron is a two-layer fully connected network including a first-layer fully connected network and a second-layer fully connected network. Dimensions of an image feature output by the first-layer fully connected network are (1, C/4, 1, 1). Dimensions of an image feature output by the second-layer fully connected network are (1, C, 1, 1). C denotes the number of channels of the face image.

The training apparatus of a face recognition model can perform the method according to any embodiment of the present application and has function modules and beneficial effects corresponding to the performed method. For technical details not described in detail in this embodiment, see the training method of a face recognition model according to any embodiment of the present application.

### Embodiment four

According to an embodiment of the present application, the present application further provides an electronic device and a readable storage medium.

FIG. 9 is a block diagram of an electronic device for performing a training method of a face recognition model according to an embodiment of the present application. Electronic devices are intended to represent various forms of digital computers, for example, laptop computers, desktop computers, worktables, personal digital assistants, servers, blade servers, mainframe computers and other applicable computers. Electronic devices may also represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present application as described and/or claimed herein.

As shown in FIG. 9, the electronic device includes one or more processors 901, a memory 902, and interfaces for connecting components, including a high-speed interface and a low-speed interface. The components are interconnected to each other by different buses and may be mounted on a common mainboard or in other manners as desired. The processor may process instructions executed in the electronic device, including instructions stored in or on the memory to make graphic information of a graphical user interface (GUI) displayed on an external input/output device (for example, a display device coupled to an interface). In other implementations, if required, multiple processors and/or multiple buses may be used with multiple memories. Similarly, multiple electronic devices may be connected, each providing some necessary operations (for example, a server array, a set of blade servers or a multi-processor system). FIG. 9 shows one processor 901 by way of example.

The memory 902 is the non-transitory computer-readable storage medium according to the present application. The memory stores instructions executable by at least one processor to cause the at least one processor to perform the training method of a face recognition model according to the present application. The non-transitory computer-readable storage medium of the present application stores computer instructions for causing a computer to perform the training method of a face recognition model according to the present application.

The memory 902 as a non-transitory computer-readable storage medium is configured to store non-transitory software programs and non-transitory computer-executable programs and modules, for example, program instructions/modules (for example, the input module 701, the self-weighting processing module 702 and the training module 703 as shown in FIG. 7) corresponding to the training method of a face recognition model according to the present application. The processor 901 executes non-transitory software programs, instructions and modules stored in the memory 902 to execute various function applications and data processing of a server, that is, implement the training method of a face recognition model according to the preceding method embodiments.

The memory 902 may include a program storage region and a data storage region. The program storage region may store an operating system and an application program required by at least one function. The data storage region may store data created according to the use of the electronic device for performing the training method of a face recognition model. Additionally, the memory 902 may include a high-speed random-access memory and a non-transitory memory, for example, at least one disk memory, a flash memory or another non-transitory solid-state memory. In some embodiments, the memory 902 optionally includes memories disposed remote from the processor 901, and these remote memories may be connected, through a network, to the electronic device for the training method of a face recognition model. Examples of the preceding network include, but are not limited to, the Internet, an intranet, a local area network, a mobile communication network and a combination thereof.

The electronic device for performing the training method of a face recognition model may further include an input device 903 and an output device 904. The processor 901, the memory 902, the input device 903 and the output device 904 may be connected by a bus or in other manners. FIG. 9 uses connection by a bus as an example.

The input device 903 can receive input number or character information and generate key signal input related to user settings and function control of the electronic device for the training method of a face recognition model. The input device 903 may be, for example, a touchscreen, a keypad, a mouse, a trackpad, a touchpad, a pointing stick, one or more mouse buttons, a trackball or a joystick. The output device 904 may include, for example, a display device, an auxiliary lighting device (for example, a light-emitting diode (LED)) or a haptic feedback device (for example, a vibration motor). The display device may include, but is not limited to, a liquid-crystal display (LCD), a LED display or a plasma display. In some embodiments, the display device may be a touchscreen.

The various embodiments of the systems and techniques described herein may be implemented in digital electronic circuitry, integrated circuitry, an application-specific integrated circuit (ASIC), computer hardware, firmware, software and/or a combination thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input device and at least one output device and transmitting the data and instructions to the memory system, the at least one input device and the at least one output device.

These computing programs (also referred to as programs, software, software applications or codes) include machine instructions of a programmable processor. These computing programs may be implemented in a high-level procedural and/or object-oriented programming language and/or in an assembly/machine language. As used herein, the term "machine-readable medium" or "computer-readable medium" refers to any computer program product, device and/or apparatus (for example, a magnetic disk, an optical disk, a memory or a programmable logic device (PLD)) for providing machine instructions and/or data for a programmable processor, including a machine-readable medium for receiving machine instructions as machine-readable signals. The term "machine-readable signal" refers to any signal used in providing machine instructions and/or data for a programmable processor.

In order that interaction with a user is provided, the systems and techniques described herein may be implemented on a computer. The computer has a display device (for example, a cathode-ray tube (CRT) or liquid-crystal display (LCD) monitor) for displaying information to the user; and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a user computer having a graphical user interface or a web browser through which a user can interact with implementations of the systems and techniques described herein) or a computing system including any combination of such back-end, middleware or front-end components. The components of the system may be interconnected by any form or medium of digital data communication (for example, a communication network). Examples of the communication network include a local area network (LAN), a wide area network (WAN), the Internet and a blockchain network.

The computing system may include clients and servers. A client and a server are generally remote from each other and typically interact through a communication network. The relationship between the client and the server arises by virtue of computer programs running on the respective computers and having a client-server relationship to each other.

According to the solution of this embodiment of the present application, when a to-be-trained face recognition model does not satisfy a convergence condition, a first block of the to-be-trained face recognition model is used as a current block and a face image of a current user is input into the current block; then an image feature output by the current block is input into a current attention module, and self-weighting processing is performed, through the current attention module, on the image feature output by the current block so that an image feature is obtained after the self-weighting processing; then the image feature obtained after the self-weighting processing is input to a subsequent block of the current block; the subsequent block is used as the current block; and the preceding operations are repeatedly performed until the image feature output by the current block is input into the last block of the to-be-trained face recognition model; and then the to-be-trained face recognition model is trained by using an image feature output by the last block; a face image of the next user is used as the face image of the current user; and the preceding operations are repeatedly performed until the to-be-trained face recognition model satisfies the convergence condition. That is, in the present application, a current attention module is configured between the current block and the subsequent block of the current block. The image feature output by the current block can be emphasized and suppressed through the current attention module. In this manner, the accuracy with which the face recognition model recognizes a face wearing a mask can be effectively improved. In contrast, in an existing training method of a face recognition model, the face recognition model is not specially processed for the case of a face wearing a mask, causing the accuracy of recognizing a face wearing a mask by the face recognition model to be not high. In the present application, the solution of configuring one attention module between each two adjacent blocks overcomes the problem of a not high accuracy with which a face recognition model recognizes a face wearing a mask in the existing art. The solution of this embodiment of the present application can effectively improve the accuracy with which the face recognition model recognizes a face wearing a mask. Moreover, the solution of this embodiment of the present application can be easily implemented and popularized and can be applied more widely.

It is to be understood that various forms of the preceding flows may be used, with steps reordered, added or removed. For example, the steps described in the present application may be executed in parallel, in sequence or in a different order as long as the desired result of the technical solution disclosed in the present application is achieved. The execution sequence of these steps is not limited herein.

The scope of the present application is not limited to the preceding embodiments. It is to be understood by those skilled in the art that various modifications, combinations, sub-combinations and substitutions may be made depending on design requirements and other factors.

## Claims

1. A training method of a face recognition model, comprising:
in response to determining that a to-be-trained face recognition model does not satisfy a convergence condition, using a first block of the to-be-trained face recognition model as a current block and inputting a face image of a current user into the current block, wherein the face image comprises an image of a face wearing a mask and an image of a face not wearing a mask;
inputting an image feature output by the current block into a current attention module and performing, through the current attention module, self-weighting processing on the image feature output by the current block to obtain an image feature after the self-weighting processing;
inputting the image feature obtained after the self-weighting processing into a subsequent block of the current block, using the subsequent block as the current block, and repeatedly performing the preceding operations until an image feature output by the current block is input into a last block of the to-be-trained face recognition model; and
training the to-be-trained face recognition model by using an image feature output by the last block, using a face image of a next user as the face image of the current user, and repeatedly performing the preceding operations until the to-be-trained face recognition model satisfies the convergence condition.

2. The method of claim 1, wherein inputting the image feature output by the current block into the current attention module and performing, through the current attention module, the self-weighting processing on the image feature output by the current block to obtain the image feature after the self-weighting processing comprises:
inputting the image feature output by the current block into a spatial attention module in the current attention module to obtain a spatial mask output by the spatial attention module;
performing first element-wise multiplication on the image feature output by the current block and the spatial mask output by the spatial attention module to obtain an image feature after the first element-wise multiplication;
inputting the image feature obtained after the first element-wise multiplication into a channel attention module in the current attention module to obtain a channel mask output by the channel attention module; and
performing second element-wise multiplication on the image feature obtained after the first element-wise multiplication and the channel mask output by the channel attention module to obtain an image feature after the second element-wise multiplication; and using the image feature obtained after the second element-wise multiplication as the image feature obtained after the self-weighting processing.

3. The method of claim 2, wherein inputting the image feature output by the current block into the spatial attention module in the current attention module to obtain the spatial mask output by the spatial attention module comprises:
inputting a face feature output by the current block into a channel maximum global pool in the spatial attention module and a channel average global pool in the spatial attention module separately to obtain an image feature output by the channel maximum global pool and an image feature output by the channel average global pool;
performing a convolution calculation on the image feature output by the channel maximum global pool and the image feature output by the channel average global pool to obtain an image feature after the convolution calculation; and
calculating, according to the image feature obtained after the convolution calculation, the spatial mask output by the spatial attention module.

4. The method of claim 2, wherein inputting the image feature obtained after the first element-wise multiplication into the channel attention module in the attention module to obtain the channel mask output by the channel attention module comprises:
inputting the image feature obtained after the first element-wise multiplication into a maximum global pool in the channel attention module and an average global pool in the channel attention module separately to obtain an image feature output by the maximum global pool and an image feature output by the average global pool;
inputting the image feature output by the maximum global pool and the image feature output by the average global pool into a multilayer perceptron to obtain an image feature output by the multilayer perceptron; and
calculating, according to the image feature output by the multilayer perceptron, the channel mask output by the channel attention module.

5. The method of claim 3, wherein dimensions of the image feature obtained after the convolution calculation are (1, 1, H, W), wherein H denotes a height of the face image, and W denotes a width of the face image.

6. The method of claim 4, wherein the multilayer perceptron is a two-layer fully connected network comprising a first-layer fully connected network and a second-layer fully connected network, dimensions of an image feature output by the first-layer fully connected network are (1, C/4, 1, 1), and dimensions of an image feature output by the second-layer fully connected network are (1, C, 1, 1), wherein C denotes a number of channels of the face image.

7. A training apparatus of a face recognition model, comprising an input module, a self-weighting processing module and a training module, wherein
the input module is configured to, in response to determining that a to-be-trained face recognition model does not satisfy a convergence condition, use a first block of the to-be-trained face recognition model as a current block and input a face image of a current user into the current block, wherein the face image comprises an image of a face wearing a mask and an image of a face not wearing a mask;
the self-weighting processing module is configured to input an image feature output by the current block into a current attention module and perform, through the current attention module, self-weighting processing on the image feature output by the current block to obtain an image feature after the self-weighting processing;
the input module is further configured to input the image feature obtained after the self-weighting processing into a subsequent block of the current block, use the subsequent block as the current block, and repeatedly perform the preceding operations until an image feature output by the current block is input into a last block of the to-be-trained face recognition model; and
the training module is configured to train the to-be-trained face recognition model by using an image feature output by the last block, use a face image of a next user as the face image of the current user, and repeatedly perform the preceding operations until the to-be-trained face recognition model satisfies the convergence condition.

8. The apparatus of claim 7, wherein the self-weighting processing module comprises a spatial mask calculation sub-module, a first weighting processing sub-module, a channel mask calculation sub-module and a second weighting processing sub-module, wherein
the spatial mask calculation sub-module is configured to input the image feature output by the current block into a spatial attention module in the current attention module to obtain a spatial mask output by the spatial attention module;
the first weighting processing sub-module is configured to perform first element-wise multiplication on the image feature output by the current block and the spatial mask output by the spatial attention module to obtain an image feature after the first element-wise multiplication;
the channel mask calculation sub-module is configured to input the image feature obtained after the first element-wise multiplication into a channel attention module in the current attention module to obtain a channel mask output by the channel attention module; and
the second weighting processing sub-module is configured to perform second element-wise multiplication on the image feature obtained after the first element-wise multiplication and the channel mask output by the channel attention module to obtain an image feature after the second element-wise multiplication; and use the image feature obtained after the second element-wise multiplication as the image feature obtained after the self-weighting processing.

9. The apparatus of claim 8, wherein the spatial mask calculation sub-module is configured to input a face feature output by the current block into a channel maximum global pool in the spatial attention module and a channel average global pool in the spatial attention module separately to obtain an image feature output by the channel maximum global pool and an image feature output by the channel average global pool; perform a convolution calculation on the image feature output by the channel maximum global pool and the image feature output by the channel average global pool to obtain an image feature after the convolution calculation; and calculate, according to the image feature obtained after the convolution calculation, the spatial mask output by the spatial attention module.

10. The apparatus of claim 8, wherein the channel mask calculation sub-module is configured to input the image feature obtained after the first element-wise multiplication into a maximum global pool in the channel attention module and an average global pool in the channel attention module separately to obtain an image feature output by the maximum global pool and an image feature output by the average global pool; input the image feature output by the maximum global pool and the image feature output by the average global pool into a multilayer perceptron to obtain an image feature output by the multilayer perceptron; and calculate, according to the image feature output by the multilayer perceptron, the channel mask output by the channel attention module.

11. The apparatus of claim 9, wherein dimensions of the image feature obtained after the convolution calculation are (1, 1, H, W), wherein H denotes a height of the face image, and W denotes a width of the face image.

12. The apparatus of claim 10, wherein the multilayer perceptron is a two-layer fully connected network comprising a first-layer fully connected network and a second-layer fully connected network, dimensions of an image feature output by the first-layer fully connected network are (1, C/4, 1, 1), and dimensions of an image feature output by the second-layer fully connected network are (1, C, 1, 1), wherein C denotes a number of channels of the face image.

13. An electronic device, comprising:
at least one processor; and
a memory communicatively connected to the at least one processor, wherein
the memory stores instructions executable by the at least one processor to enable the at least one processor to perform the method of any one of claims 1 to 6.

14. A non-transitory computer-readable storage medium storing computer instructions for causing a computer to perform the method of any one of claims 1 to 6.
